# EUROPÄISCHE PATENTSCHRIFT

(11) **EP 1 430 990 B1**
(45) Veröffentlichungstag und Bekanntmachung des Hinweises auf die Patenterteilung: **07.09.2005**
(21) Anmeldenummer: 04004915.7
(22) Anmeldetag: 02.03.2002
(51) Int. Cl.: B23Q 1/01

(54) **Verkettetes Fertigungssystem zur Durchführung von Bearbeitungsoperationen an Teilen**
Serial production system for machining of workpieces
Système de fabrication à enchaînement pour l'usinage de pièces

(30) Priorität: 12.03.2001 DE 10112169
(43) Veröffentlichungstag der Anmeldung: 23.06.2004
(62) Teilanmeldung aus: 02004795.7
(73) Patentinhaber: FELSOMAT GmbH & Co. KG, D-75203 Königsbach-Stein (DE)
(72) Erfinder: Jäger, Helmut F., 75203 Königsbach-Stein (DE)
(74) Vertreter: Steil, Christian

(56) Entgegenhaltungen:
- EP-A- 0 924 584
- WO-A-86/07554
- DE-A- 3 243 335
- US-A- 5 368 539
- US-A- 5 997 452

## Beschreibung

Die Erfindung betrifft ein verkettetes Fertigungssystem zur Durchführung von Bearbeitungsoperationen an Teilen, mit mindestens einer ersten Bearbeitungsstation zur Durchführung einer ersten Bearbeitungsoperation, mit mindestens einer zweiten Bearbeitungsstation zur Durchführung einer zweiten Bearbeitungsoperation, und mit mindestens einem Portal, das zwei der Bearbeitungsstationen miteinander koppelt.

Verkettete Fertigungssysteme werden in der Serienfertigung eingesetzt, um Werkstücke auf möglichst zuverlässige und kostengünstige Weise in einer Vielzahl von Bearbeitungsstationen bearbeiten zu können (siehe z.B. das dokument EP-A-0 924 584). Typische Anwendungsfälle für verkettete Fertigungssysteme finden sich beispielsweise in der Automobilindustrie, z.B. für eine hoch effiziente Motoren- oder Getriebekomponentenfertigung.

Als klassisches Beispiel für ein verkettetes Fertigungssystem ist die Linienfertigung bekannt, bei der der Teilefluss zwischen einzelnen Bearbeitungsstationen über ein Band gesteuert wird, das gleichzeitig als Puffer dient. Von dem Band zweigen seitlich Portale zu einzelnen Bearbeitungsstationen ab.

Als weiteres Beispiel für ein verkettetes Fertigungssystem ist die Verkopplung einer Mehrzahl von Bearbeitungsstationen über Portale bekannt, wobei zwischen einzelnen oder mehreren Bearbeitungsstationen Bandpufferspeicher zur Entkopplung angeordnet sind. Bei derartigen Bandpufferspeichern handelt es sich um Transportbänder, mit denen einzelne Teile gefördert oder gespeichert werden. Solche Puffer nehmen in der Regel etwa 10 bis 20 Teile auf und können gewisse Schwankungen, die durch Verzögerungen an den zugeordneten Bearbeitungsstationen auftreten, auffangen.

Nachteilig ist hierbei jedoch, dass die Bandpufferspeicher nur für eine geringe Teilezahl ausgelegt sind, so dass bei größeren Störungen an einer oder mehrerer Bearbeitungseinrichtungen des Fertigungssystems das ganze System binnen Kürze zum Stillstand kommt. Außerdem wirkt sich nachteilig aus, dass bei Ausfall eines Bandes oder bei einem Transportstau an einem Band keine Ersatztransportkapazität zur Verfügung steht, wodurch die Verfügbarkeit des Gesamtsystems beeinträchtigt wird. Schließlich ist die Verwendung von Bändern aufwendig und ermöglicht nicht den direkten Transport einzelner Teile. Auch wird die Zugänglichkeit zu einzelnen Bearbeitungsstationen dadurch beeinträchtigt.

Der Erfindung liegt somit die Aufgabe zugrunde, ein verbessertes verkettetes Fertigungssystem zur Durchführung von Bearbeitungsoperationen an Teilen anzugeben, das einen schnellen Transport von Teilen zu den jeweiligen Bearbeitungsstationen erlaubt, und eine möglichst hohe Verfügbarkeit und Ausfallsicherheit bei kurzen Durchlaufzeiten des Gesamtsystems bei niedrigen Kosten gewährleistet.

Diese Aufgabe wird durch ein verkettetes Fertigungssystem zur Durchführung von Bearbeitungsoperationen an Teilen gelöst, mit mindestens einer ersten Bearbeitungsstation zur Durchführung einer ersten Bearbeitungsoperation, mit mindestens einer zweiten Bearbeitungsstation zur Durchführung einer zweiten Bearbeitungsoperation, mit mindestens einem ersten Portal (Logistikportal), das sich in einer ersten Richtung (Y-Richtung) erstreckt und mindestens eine erste und eine zweite Bearbeitungsstation miteinander koppelt, mit mindestens einem zweiten Portal (Handhabungsportal), das sich quer zur ersten Richtung in einer zweiten Richtung (X-Richtung) erstreckt und eine Mehrzahl der ersten oder zweiten Bearbeitungsstationen miteinander koppelt, wobei zumindest jedem Handhabungsportal eine Speicherablage zur Aufnahme von Teilen zugeordnet ist, wobei auf den Handhabungsportalen Schlitten verfahrbar sind, die eine zumindest in Vertikalrichtung (Z-Richtung) verfahrbare Greifeinrichtung aufweisen, die zumindest eine zusätzliche Handhabungsoperation, wie etwa Verschieben in Y-Richtung oder Verdrehen, erlaubt, und wobei auf den Logistikportalen Schlitten verfahrbar sind, die mit einer Greifeinrichtung zum Aufnehmen oder Ablegen von Teilen und zur Bewegung der Teile in Z-Richtung gekoppelt sind.

Mit der Erfindung soll ferner ein für ein solch verkettetes Fertigungssystem besonders geeignetes Portal angegeben werden, mit dem sich gleichermaßen eine Erhöhung der Zuverlässigkeit des Gesamtsystems bei geringen Kosten und kurzer Durchlaufzeit erreichen läßt.

Die Aufgabe der Erfindung wird auf diese Weise vollkommen gelöst.

Durch die Kombination von Logistikportalen, die nachfolgende Bearbeitungsstationen, an denen unterschiedliche Bearbeitungsoperationen durchgeführt werden, in Verbindung mit Handhabungsportalen, die sich in einer Richtung quer zu den Logistikportalen erstrecken und eine Mehrzahl von Bearbeitungsstationen miteinander koppeln, wird in Verbindung mit den Handhabungsportalen zugeordneten Speicherablagen zur Aufnahme von Teilen eine hohe Variabilität und eine netzartige Struktur ermöglicht. Dies ermöglicht einen Teilefluss sowohl von einer ersten Bearbeitungsstation zu einer zweiten, nachgeordneten Bearbeitungsstation, an der eine andere Bearbeitungsoperation durchgeführt wird, als auch eine schnelle Verteilung von Teilen zwischen benachbarten Bearbeitungsstationen, die die gleiche Bearbeitungsoperation durchführen können. Durch die zusätzliche Verwendung von Speicherablagen, die jeweils einem Handhabungsportal zugeordnet sind, wird gleichzeitig eine ausreichende Pufferkapazität zum Ausgleich von betriebsbedingten Schwankungen oder Störungen bereitgestellt, wobei durch die Kopplung von aufeinanderfolgenden Bearbeitungsstationen für unterschiedliche Bearbeitungsoperationen einerseits und die Kopplung von Bearbeitungsstationen, die die gleiche Bearbeitungsoperation parallel zu benachbarten Bearbeitungsstationen durchführen können, andererseits eine äußerst hohe Flexibilität des Gesamtsystems gewährleistet und so die Ausfallsicherheit des Gesamtsystems deutlich erhöht wird.

Im Gegensatz zu über Bänder miteinander verkoppelten Systemen ermöglicht die Verkopplung des Gesamtsystems sowohl in Richtung des Hauptteileflusses als auch in Querrichtung dazu über Portale einen schnellen Austausch von Teilen zwischen verschiedenen Bearbeitungsstationen, so dass bei Ausfall einzelner Bearbeitungsstationen die betreffenden Bearbeitungsoperationen von anderen Bearbeitungsstationen übernommen werden können, ohne dass der Wirkungsgrad des Gesamtsystems dadurch merklich beeinflusst wird. So können Parallelkapazitäten sowohl in Richtung des Teileflusses als auch in Querrichtung dazu vorgehalten und auf effektive Weise genutzt werden. Auch werden sogenannte Verkettungsverluste vermieden, die bei herkömmlichen Systemen auftreten, wenn verschiedene Bearbeitungsstationen durch verschiedene Einrichtungen verkoppelt werden. Dadurch, dass die Logistikportale lediglich Schlitten aufweisen müssen, die zur Bewegung der Teile in Z-Richtung ausgebildet sind und eine Greifoperation zum Aufnehmen oder Ablegen von Teilen ermöglichen, werden die Gesamtkosten des Fertigungssystems deutlich vermindert. Notwendige zusätzliche Handhabungsoperationen können von den Handhabungsportalen in Verbindung mit den Speicherablagen geleistet werden, da an den Handhabungsportalen Schlitten mit aufwendiger ausgebildeten Handhabungseinrichtungen vorgesehen sein können. Die Schlitten an den Handhabungsportalen erlauben zumindest ein Verfahren in Vertikalrichtung und eine zusätzliche Handhabungsoperation, wie etwa ein Verschieben in Y-Richtung oder ein Verdrehen um eine oder mehrere Achsen, sowie eine Greifoperation. Somit können komplexere Handhabungsaufgaben von den Handhabungsportalen erledigt werden, während der einfache Transport von Teilen zum Be- und Entladen einzelner Bearbeitungsstationen und zum Speichern von Teilen in den Speicherablagen durch einfacher aufgebaute Logistikportale auf kostengünstige Weise erledigt werden kann.

In vorteilhafter Weiterbildung der Erfindung ist eine Mehrzahl von Handhabungsportalen und Logistikportalen vorgesehen, die sich jeweils in Kreuzungspunkten miteinander kreuzen, wobei jedem Kreuzungspunkt eine Speicherablage zugeordnet ist.

Durch diese Maßnahme wird eine zusätzliche Redundanz in das Fertigungssystem eingeführt, da somit ein sowohl in Richtung des Hauptteileflusses als auch in Querrichtung dazu verkettetes Gesamtsystem erreicht wird, das als netzartige Struktur ausgebildet ist, das an den Netzwerkknotenpunkten Speicherablagen besitzt und somit eine äußerst hohe Flexibilität gewährleistet.

Ein derartiges System zeichnet sich durch einen besonders einfachen Aufbau bei gleichzeitig hoher Flexibilität und äußerst günstiger Ausnutzung der von dem Fertigungssystem eingenommenen Fläche aus.

In weiterer vorteilhafter Ausgestaltung der Erfindung sind in den Speicherablagen Zusatzeinrichtungen, wie etwa Reinigungseinrichtungen, Positioniereinrichtungen, Abblaseinrichtungen, Wascheinrichtungen, Signiereinrichtungen o. dgl. vorgesehen, mit denen die Greifeinrichtungen an den Schlitten der Handhabungsportale zur Durchführung von Handhabungsoperationen zusammenwirken.

Auf diese Weise werden zusätzliche Handhabungszellen, in denen solche Handhabungsoperationen durchgeführt werden, entbehrlich. Zusätzliche Transporteinrichtungen innerhalb solcher Handhabungsvorrichtungen, die herkömmlicherweise notwendig sind, werden überflüssig, da diese Transportfunktionen von den an den Schlitten der Handhabungsportale vorgesehenen Greifeinrichtungen mit übernommen werden können. Die an den verfahrbaren Schlitten der Handhabungsportale vorgesehenen Greifeinrichtungen können dabei gleichzeitig mit den Zusatzeinrichtungen derart zusammenwirken, dass bei üblichen Handhabungsvorrichtungen notwendige zusätzliche Transportmittel weitgehend überflüssig werden.

In vorteilhafter Weiterbildung der Erfindung sind die auf den Logistikportalen verfahrbaren Schlitten und Greifeinrichtungen lediglich zum Verfahren der Teile entlang der Logistikportale und zur Bewegung der Teile in Vertikalrichtung, sowie zur Übergabe von Teilen ausgebildet.

Auf diese Weise werden die Logistikportale lediglich zum Transport von Teilen zwischen Bearbeitungsstationen und zum Verfahren in Vertikalrichtung, sowie zum Aufnehmen und Absetzen der Teile ausgebildet, wodurch zum einen die Kosten deutlich reduziert werden können und zum anderen besonders geeignete Antriebssysteme verwendet werden können, die eine besonders hohe Fördergeschwindigkeit und Verfügbarkeit erlauben.

Gemäß einer Weiterbildung dieser Ausführung sind auf mindestens einem Logistikportal eine Mehrzahl von gesteuert verfahrbaren Schlitten angeordnet, von denen zumindest zwei benachbarte Schlitten über Streben mit einer Gelenkverbindung gekoppelt sind, an der eine Greifeinrichtung aufgenommen ist.

Durch diese Maßnahme lässt sich ein besonders schneller Transport der Teile sowohl in Horizontalrichtung als auch in Vertikalrichtung auf besonders kostengünstige Weise ermöglichen.

Eine besonders schnelle Verfahrbarkeit bei gleichzeitiger Reduzierung der Massen wird dann erreicht, wenn die Schlitten als Läufer eines Direktantriebs ausgebildet sind, dessen Induktorkamm am Logistikportal vorgesehen ist.

Hierbei muss das Logistikportal lediglich einen Horizontalträger aufweisen, an dem der Induktorkamm aufgenommen ist, der gleichzeitig als Führung ausgebildet ist, auf dem die Schlitten geführt sind.

Hiermit ergibt sich eine äußerst hohe Transportgeschwindigkeit der Teile bei gleichzeitig vereinfachtem Aufbau.

Zusätzlich können derartige Logistikportale vorzugsweise mit einer Auffangwanne für Flüssigkeiten versehen sein, um so die Verschleppung von Kühlschmiermittel beim Transport zwischen einzelnen Bearbeitungsstationen und Speicherablagen zu vermeiden. Die Logistikportale sind hierbei vorzugsweise auf Vertikalstreben entweder von unten aus abgestützt oder von oben an einer geeigneten Deckenkonstruktion aufgehängt, so dass der Transport von Teilen entlang der Logistikportale den übrigen Raum innerhalb des Fertigungssystems praktisch nicht beeinträchtigt und die betreffenden Bearbeitungsstationen von oben be- und entladen werden können.

Durch die besondere Konstruktion der verwendeten Logistikportale wird die notwendige Bauhöhe erheblich reduziert, da zusätzliche Führungen in Vertikalrichtung vollständig entfallen.

Gemäß einer weiteren Variante der Erfindung sind die Logistikportale in eine Mehrzahl von Einzelabschnitten unterteilt, die jeweils in den Speicherablagen enden, wobei innerhalb der Speicherablagen jeweils eine Transporteinrichtung zum Transport von Teilen zwischen den jeweiligen Endabschnitten eines Logistikportals vorgesehen ist.

Diese Ausführung hat den Vorteil, dass die Transportvorgänge zwischen den Handhabungsportalen und den Logistikportalen voneinander entkoppelt sind, so dass keine besonderen Maßnahmen zur Vermeidung von Kollisionen notwendig sind. Dabei wird durch die Transporteinrichtungen innerhalb der Speicherablagen der ungehinderte Transport von Teilen entlang der Logistikportale sichergestellt. Des weiteren besteht die Möglichkeit, die Logistikportale und Handhabungsportale etwa auf der gleichen Arbeitshöhe zu führen, so dass unnötig große Vertikalhübe an den Logistikportalen und an den Handhabungsportalen vermieden werden.

In vorteilhafter Weiterbildung dieser Ausführung ist zwischen den jeweiligen Endabschnitten eines Logistikportals innerhalb der Speicherablage ein Schieber zum Transport von Teilen vorgesehen.

Auf diese Weise wird mit besonders einfachen Mitteln der Transport zwischen den Endabschnitten sichergestellt.

Hinsichtlich des Portals wird die Aufgabe der Erfindung durch ein Portal zur Bewegung von Teilen in Horizontal- und Vertikalrichtung gelöst, mit einer Horizontalführung, die an einer Vertikalverstrebung aufgenommen ist und auf der eine Mehrzahl von Schlitten gesteuert verfahrbar ist, wobei zumindest zwei benachbarte Schlitten über Streben mit einer Gelenkverbindung gekoppelt sind, an der eine Greifeinrichtung zur Handhabung eines Teils aufgenommen ist.

Auch durch die Verwendung eines derartigen Portals, das ein äußerst schnelles Verfahren von Teilen sowohl in Erstreckungsrichtung des Portals als auch in Vertikalrichtung erlaubt, lässt sich das gesamte Fertigungssystem erheblich kostengünstiger und platzsparender bei gleichzeitig verbesserter Durchlaufgeschwindigkeit von Teilen durch das Gesamtsystem gestalten.

Wie vorstehend bereits ausgeführt, sind hierbei die Schlitten vorzugsweise als Läufer eines Direktantriebs ausgebildet, dessen Induktorkamm am Portal vorgesehen ist, wobei der Induktorkamm gleichzeitig als Führung für die Schlitten ausgeführt sein kann und zusätzlich eine Auffangwanne unterhalb des Portals vorgesehen sein kann.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: einen Ausschnitt aus einem erfindungsgemäßen verketteten Fertigungssystem in stark vereinfachter, schematischer Darstellung;
- Fig. 2: eine vergrößerte Darstellung einer Speicherablage gemäß Fig. 1 in schematischer Darstellung, wobei lediglich eine Mehrzahl von Ablageplätzen für einzelne Teile angedeutet ist;
- Fig. 3: eine Längsansicht einer Speicherablage, die als geschlossene Zelle ausgeführt sein kann und durch die ein Handhabungsportal verläuft, wobei ferner ein quer dazu verlaufendes Logistikportal angedeutet ist;
- Fig. 4: eine Längsansicht eines Logistikportals in schematischer Darstellung;
- Fig. 5: eine vergrößerte Ansicht auf die Stirnfläche eines Logistikportals im Bereich des Horizontalträgers mit einer zugehörigen Wanne, in stark vereinfachter Darstellung; und
- Fig. 6: einen Ausschnitt aus einer Abwandlung des Fertigungssystems gemäß Fig. 1.

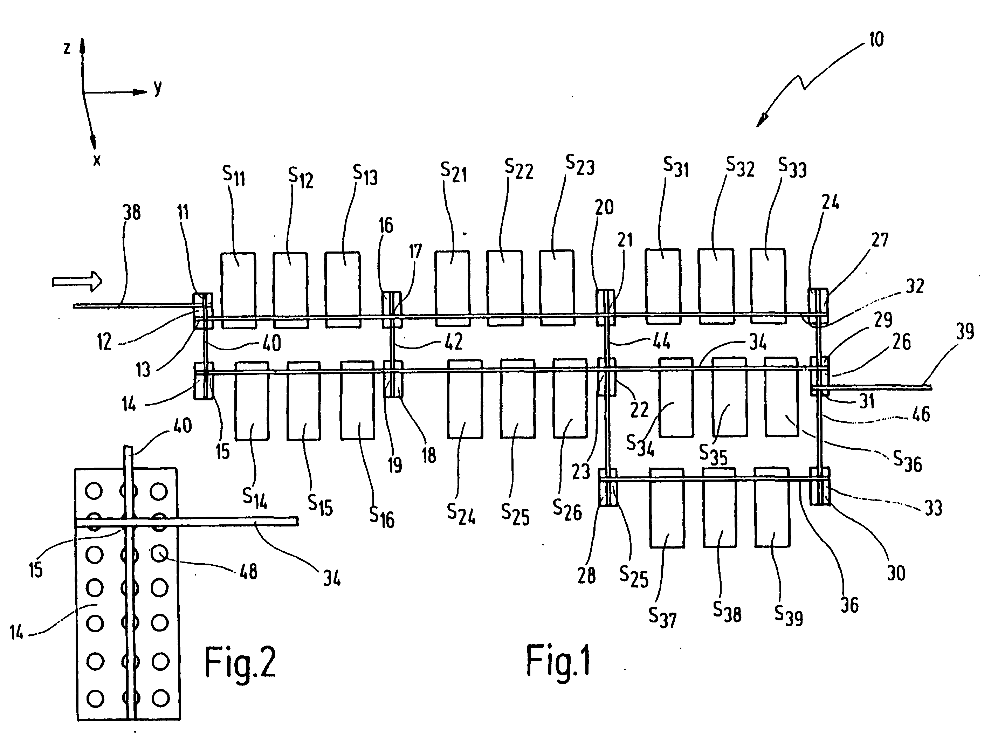

In Fig. 1 ist ein verkettetes Fertigungssystem gemäß der Erfindung äußerst schematisch dargestellt und insgesamt mit der Ziffer 10 bezeichnet.

Das Fertigungssystem 10 umfasst sechs Bearbeitungsstationen S₁₁, S₁₂, S₁₃, S₁₄, S₁₅, S₁₆, die eine erste Bearbeitungsoperation durchführen, sechs Bearbeitungsstationen S₂₁, S₂₂, S₂₃, S₂₄, S₂₅, S₂₆, die eine zweite, nachgeordnete Bearbeitungsoperation ausführen, sowie neun Bearbeitungsstationen S₃₁, S₃₂, S₃₃, S₃₄, S₃₅, S₃₆, S₃₇, S₃₈, S₃₉, die eine dritte, nachfolgende Bearbeitungsoperation ausführen.

Ein sich in Richtung des Hauptteileflusses (Y-Richtung) erstreckendes erstes Portal 32, das im Folgenden als Logistikportal bezeichnet wird, verbindet eine erste Speicherablage 12, in der eine Mehrzahl von Teilen abgelegt werden kann, mit jeweils drei nacheinander angeordneten Bearbeitungsstationen, S₁₁, S₁₂, S₁₃, die die erste Bearbeitungsoperation ausführen, mit einer Speicherablage 16, mit drei nachgeordneten Bearbeitungsstationen S₂₁, S₂₂, S₂₃, die die zweite Bearbeitungsoperation ausführen, mit einer Speicherablage 20, sowie drei Bearbeitungsstationen S₃₁, S₃₂, S₃₃, die eine dritte Bearbeitungsoperation ausführen, und mit einer sich daran anschließenden Speicherablage 24.

Ein weiteres Logistikportal 34, das parallel zum Logistikportal 32 verläuft, verbindet eine weitere Speicherablage 14, mit drei Bearbeitungsstationen S₁₄, S₁₅, S₁₆, die die erste Bearbeitungsoperation ausführen, mit einer weiteren Speicherablage 18, sowie mit drei Bearbeitungsstationen S₂₄, S₂₅, S₂₆, die die zweite Bearbeitungsoperation ausführen, mit einer weiteren Speicherablage 22, mit drei weiteren Bearbeitungsstationen S₃₄, S₃₅, S₃₆, die die dritte Bearbeitungsoperation ausführen, und mit einer weiteren Speicherablage 26.

Ein drittes Logistikportal 36, das sich parallel zu dem zweiten Logistikportal 34 erstreckt, verbindet eine weitere Speicherablage 28 mit drei Bearbeitungsstationen S₃₇, S₃₈, S₃₉, die die dritte Bearbeitungsoperation ausführen, und mit einer weiteren Speicherablage 30.

Die beiden Speicherablagen 12, 14, die über die Logistikportale 32, 34 mit jeweils drei Bearbeitungsstationen S₁₁, S₁₂, S₁₃ bzw. S₁₄, S₁₅, S₁₆ für die erste Bearbeitungsoperation gekoppelt sind, sind untereinander durch ein sich quer zu den Logistikportalen 32, 34 in X-Richtung erstreckendes zweites Portal 40, das im Folgenden als Handhabungsportal bezeichnet ist, verbunden.

In entsprechender Weise sind die nachfolgenden Speicherablagen 16, 18 bzw. 20, 22 und 24, 26 durch jeweils ein weiteres Handhabungsportal 42 bzw. 44 bzw. 46 miteinander verbunden. Das Handhabungsportal, das die Speicherablage 20 und die Speicherablage 22 miteinander verbindet, ist weiter bis zur Speicherablage 28 fortgeführt, so dass drei Kreuzungspunkte 21, 23, 25 des Handhabungsportals 44 mit den Logistikportalen 32, 34, 36 entstehen, an denen jeweils eine Speicherablage 20, 22, 28 vorgesehen ist.

Gleichermaßen sind die Speicherablagen 24, 26 und 30 über das Handhabungsportal 46 verbunden, so dass das Handhabungsportal 46 drei Kreuzungspunkte 27, 29, 33 mit den Logistikportalen 32, 34, 36 bildet, an denen jeweils eine Speicherablage 24, 26, 30 vorgesehen ist.

Zur Beschickung der Speicherablagen 12, 14 bzw. der Bearbeitungsstationen S₁₁ bis S₁₆ für die erste Bearbeitungsoperation kann beispielsweise ein weiteres Logistikportal 38 vorgesehen sein, wie in Fig. 1 angedeutet ist.

Gleichfalls kann zum weiteren Transport von Teilen aus den Speicherablagen 24, 26, 30 bzw. den Bearbeitungsstationen S₃₁ bis S₃₉ für die dritte Bearbeitungsoperation zu einer nachgeordneten Station des Fertigungssystems ein weiteres Logistikportal 39 vorgesehen sein, das beispielsweise an die Speicherablage 26 angekoppelt ist und mit dem Handhabungsportal 46 einen weiteren Kreuzungspunkt 31 bildet.

In entsprechender Weise kann das Logistikportal 38 an die erste Speicherablage 12 angekoppelt sein, so dass an der Speicherablage 12 ein weiterer Kreuzungspunkt 11 mit dem Handhabungsportal 40 entsteht.

Es versteht sich, dass die Versorgung am Eingang des Fertigungssystems an den Speicherablagen 12 bzw. 14 und am Ausgang des Fertigungssystems an den Speicherablagen 24, 26, 30 auch auf andere Weise erfolgen kann.

Die Bearbeitungsstationen S₁₁ bis S₁₆ für die erste Bearbeitungsoperation sind durch die beiden Logistikportale 32, 34 und die jeweils an Kreuzungspunkten 13, 15, 17, 19 mit den Handhabungsportalen 40, 42 vorgesehenen Speicherablagen 12, 14, 16, 18 sowohl in Y-Richtung als auch in X-Richtung redundant miteinander verkoppelt.

Gleichermaßen sind die Bearbeitungsstationen S₂₁ bis S₂₆ für die zweite Bearbeitungsoperation über die Logistikportale 32, 34, an deren Kreuzungspunkten 17, 19, 21, 23 mit den Handhabungsportalen 42, 44 die Speicherablagen 16, 18, 20, 22 vorgesehen sind, sowohl in Y-Richtung als auch in X-Richtung redundant miteinander verkoppelt.

Schließlich sind auch die Bearbeitungsstationen S₃₁ bis S₃₉ für die dritte Bearbeitungsoperation über die Logistikportale 32, 34, 36, an deren Kreuzungspunkten 21, 23, 25, 27, 29, 33 mit den Handhabungsportalen 44, 46 die Speicherablagen 20, 22, 28, 24, 26, 30 vorgesehen sind, sowohl in Y-Richtung als auch in X-Richtung redundant miteinander verkoppelt.

Insgesamt entsteht auf diese Weise ein netzartiges System, durch das sichergestellt ist, dass Verzögerungen, die durch Ausfall einzelner Bearbeitungsstationen oder durch Staus auf einzelnen Portalen auftreten, jeweils durch einen anderen Weg umgangen werden können. Auf diese Weise ermöglicht das Fertigungssystem 10 höchstmögliche Flexibilität bei gleichzeitig geringem Platzbedarf und schnellen Durchlaufzeiten.

Grundsätzlich wäre es natürlich möglich, die Speicherablagen 12, 14, 18, 20, 22, 24, 26, 28, 30 mit eigenen Transport- bzw. Handhabungssystemen auszustatten.

Um jedoch den Aufbau und die Funktionsweise des Fertigungssystems 10 so einfach wie möglich zu halten, ist es bevorzugt, dass notwendige Handhabungsoperationen, wie etwa Positionieren, Ausrichten, Verdrehen um eine erste Achse oder um eine zweite Achse, Verfahren innerhalb der Speicherablage in X- oder Y-Richtung mit Hilfe der Handhabungsportale 40, 42, 44, 46 durchgeführt werden können.

Wie beispielhaft anhand von Fig. 2 erläutert ist, könnten sich etwa unterhalb eines Logistikportals 34 drei Ablageplätze 48 befinden, die von einem auf dem Logistikportal 34 verfahrbaren Schlitten angefahren werden können. Dagegen sind beispielhaft weitere Ablageplätze 48 unterhalb des Handhabungsportals 40, sowie seitlich dazu dargestellt, die von einem darauf verfahrbaren Schlitten angefahren werden können, wobei gleichzeitig durch eine weitere Verfahrmöglichkeit in Y-Richtung sichergestellt ist, dass sämtliche Ablageplätze 48 innerhalb der Speicherablage 14 vom Handhabungsportal 40 aus angefahren werden können.

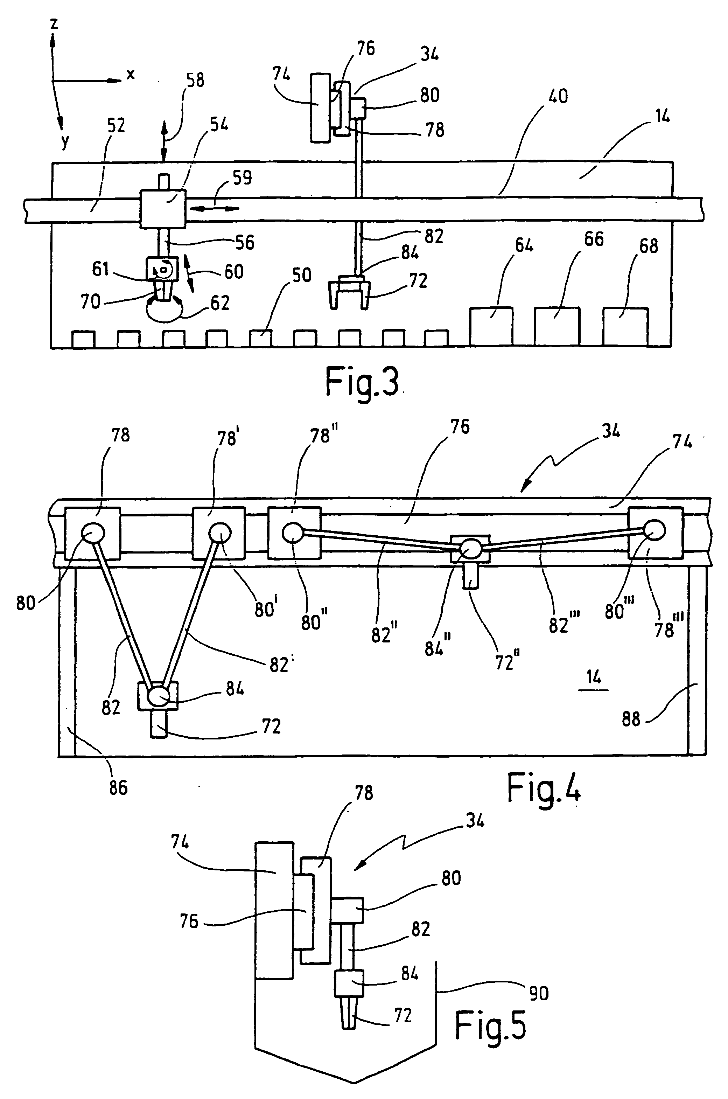

Dies ist im Folgenden anhand von Fig. 3 näher erläutert, in der die Speicherablage 14 dargestellt ist.

Die Speicherablage 14 ist vorzugsweise nach außen berührungssicher durch einen umlaufenden Schutzzaun abgeschlossen, der nur mit Durchführungen an den jeweiligen Stirnflächen für den Schlitten 54 versehen ist, der, wie durch den Pfeil 59 angedeutet ist, entlang einer Führung 52 auf dem Handhabungsportal 40 verfahrbar ist. Dagegen kann das Logistikportal 34 etwa oberhalb der Speicherablage 14 verlaufen und nur bei Bedarf von oben aus Teile 50 aus der Speicherablage 14 entnehmen oder in diese ablegen.

An dem Schlitten 54, der auf der Führung 52 des Handhabungsportals 40 in Richtung des Doppelpfeiles 59 verfahrbar ist, ist entweder eine Führung 56 in Vertikalrichtung vorgesehen, an der eine Greifeinrichtung 70 in Vertikalrichtung verfahrbar festgelegt ist, oder aber es ist ein Schwenkarm (nicht dargestellt) vorgesehen, der um eine quer zur Erstreckungsrichtung 59 des Handhabungsportals 40 (in Y-Richtung) verlaufende Schwenkachse gesteuert verschwenkbar ist. Die Greifeinrichtung 70 ist im dargestellten Fall zusätzlich noch um eine Vertikalachse (Z-Achse) verdrehbar (vgl. Doppelpfeil 62), um eine weitere, dazu senkrechte Drehachse verdrehbar, wie durch den Pfeil 61 dargestellt ist, und schließlich noch in einer Richtung senkrecht zur Erstreckungsrichtung 59 (also in Y-Richtung) verfahrbar, wie durch den Doppelpfeil 60 angedeutet ist. Insgesamt kann somit die Greifeinrichtung 70 in drei Linearachsen (X, Y, Z) gesteuert verfahren werden und zusätzlich noch um zwei zueinander senkrecht stehende Drehachsen verschwenkt werden. Mittels der Greifeinrichtung 70 können somit Teile 50 an beliebigen Stellen innerhalb der Speicherablage 14 aufgenommen und abgesetzt werden und können zusätzlich noch um zwei Achsen verschwenkt werden.

Beispielhaft sind in Fig. 3 mit den Ziffern 64, 66, 68 drei Zusatzeinrichtungen angedeutet, wobei es sich z.B. um eine Wascheinrichtung, eine Abblaseinrichtung und eine Signiereinrichtung handeln kann. Diese Zusatzeinrichtungen 64, 66, 68 können gleichfalls mittels der Greifeinrichtung 70 angefahren werden, wobei keine zusätzliche Verfahreinrichtung innerhalb der jeweiligen Zusatzeinrichtung 64, 66, 68 notwendig ist.

Dagegen erlauben die in Y-Richtung verlaufenden Logistikportale lediglich ein Verfahren von Teilen 50 entlang der Logistikportale in Y-Richtung, sowie ein Bewegen der Teile in Vertikalrichtung (Z-Richtung) und ein Ergreifen bzw. Absetzen mit Hilfe einer Greifeinrichtung 72.

Wie aus Fig. 4 näher zu ersehen ist, sind dabei jeweils zwei benachbarte Schlitten 78, 78' bzw. 78" , 78"' über jeweils eine Gelenkverbindung 80, 80' bzw. 80", 80"' und zwei verwindungssteife Streben 82, 82' bzw. 82", 82"' mit einer weiteren Gelenkverbindung 84 bzw. 84" gekoppelt, an der die Greifeinrichtung 72 bzw. 72" aufgenommen ist.

Durch ein gesteuertes Verfahren der Schlitten 78, 78' bzw. 78", 78"' auf der Horizontalführung 76 des Logistikportals 34 können somit Teile 50 in Erstreckungsrichtung des Logistikportals (Y-Richtung) verfahren werden und gleichzeitig in Vertikalrichtung (Z-Richtung) angehoben oder abgesetzt werden, wenn der Abstand zwischen den benachbarten Schlitten verändert wird.

Das betreffende Logistikportal 34 weist somit lediglich einen Horizontalträger 74 auf, der an einer irgendwie gearteten Vertikalverstrebung aufgenommen ist, wie durch die Streben 86 und 88 beispielhaft dargestellt ist, und auf dem eine Mehrzahl von Schlittenpaaren verfahrbar ist, die jeweils über ein Koppelgelenk miteinander verbunden sind.

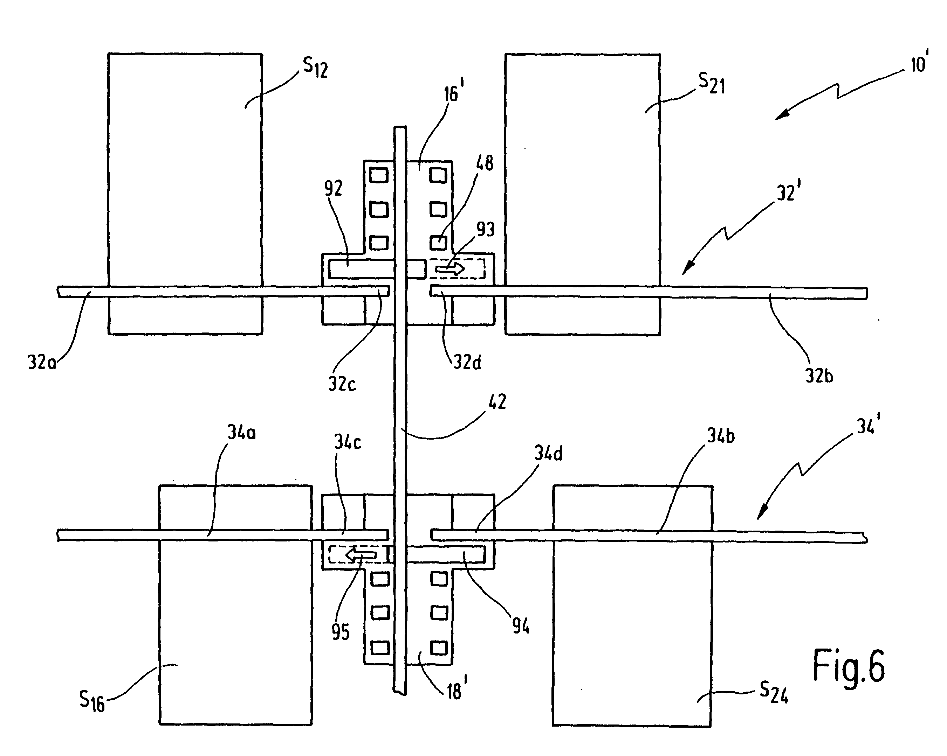

Ein besonders einfacher Aufbau mit einer gleichzeitig äußerst schnellen Verfahrmöglichkeit und geringen bewegten Massen wird dadurch gewährleistet, daß die Schlitten 78, 78', 78", 78"' als Läufer eines Direktantriebs ausgebildet sind, dessen Induktorkamm 76 am Horizontalträger 74 aufgenommen ist, wobei der Induktorkamm gleichzeitig als Horizontalführung ausgebildet ist (vgl. Fig. 5).

Diese Logistikportale können in ausreichender Höhe oberhalb der Bearbeitungsstationen S₁₁ bis S₃₉ verlaufen, um eine Zuführung und eine Entnahme von Teilen in die Bearbeitungsstationen von oben zu erlauben.

Entlang der Bereiche, über die lediglich ein Transport von Teilen in Erstreckungsrichtung der Logistikportale erfolgen soll, sind die Logistikportale vorzugsweise mit einer Auffangwanne 90 versehen, um von den Teilen herabtropfendes Kühlschmiermittel aufzufangen.

In Fig. 6 ist eine Abwandlung des Fertigungssystems gemäß Fig. 1 dargestellt und insgesamt mit der Ziffer 10' bezeichnet. Fig. 6 zeigt lediglich einen kleineren Ausschnitt des Fertigungssystems mit vier Bearbeitungsstationen S₁₂, S₁₆, S₂₁ und S₂₄. Die beiden Bearbeitungsstationen S₁₂ und S₁₆ können beispielsweise wie bei dem Fertigungssystem gemäß Fig. 1 für eine erste Bearbeitungsoperation ausgelegt sein, während die beiden Bearbeitungsstationen S₂₁ und S₂₄ für eine nachfolgende Bearbeitungsoperation ausgebildet sein können.

Die beiden Bearbeitungsstationen S₁₂ und S₂₁ werden durch ein Logistikportal 32' mit Teilen versorgt. Die beiden Bearbeitungsstationen S₁₆ und S₂₄ werden durch ein Logistikportal 34' mit Teilen versorgt.

Im Unterschied zu der Darstellung gemäß Fig. 1 sind die Logistikportale nicht durchgehend ausgeführt, sondern sind in eine Mehrzahl von Einzelabschnitten unterteilt, die jeweils in Speicherablagen enden. So weist das Logistikportal 32' einen Teilabschnitt 32a auf, der mit einem Endabschnitt 32c in der Speicherablage 16' endet, sowie einen Teilabschnitt 32b, der mit einem Endabschnitt 32d in der Speicherablage 16' gegenüber dem anderen Endabschnitt 32c endet.

In entsprechender Weise weist das Logistikportal 34' einen Einzelabschnitt 34a auf, der mit einem Endabschnitt 34c in einer Speicherablage 18' endet, sowie einen weiteren Einzelabschnitt 34b, der mit einem Endabschnitt 34d in der Speicherablage 18' gegenüber dem anderen Endabschnitt 34c endet.

Es versteht sich, dass die Logistikportale 32', 34' in entsprechender Weise jeweils mit weiteren Endabschnitten in Speicherablagen enden können und entsprechend der Größe des Gesamtsystems in weitere Einzelabschnitte aufgeteilt sein können.

Die beiden Speicherablagen 16', 18' sind durch das Handhabungsportal 42 wie bei der Ausführung gemäß Fig. 1 verbunden.

Zum Transport von Teilen zwischen den jeweiligen Endabschnitten 32c, 32d des Logistikportals 32' bzw. 34c, 34d des Logistikportals 34' ist jeweils ein Schieber 92 bzw. 94 vorgesehen.

Der Schieber 92 innerhalb der Speicherablage 16' befindet sich gemäß Fig. 6 in seiner linken Position, in der er zur Aufnahme eines Teils von einer Greifeinrichtung, die an einem auf dem Endabschnitt 32c befindlichen Schlitten gehalten ist, geeignet ist, sowie zur Aufnahme eines weiteren Teils unterhalb des Handhabungsportals 42. Der Schlitten 92 kann in Richtung des Pfeiles 93 nach rechts in die gestrichelt gezeichnete Position verfahren werden, so dass dann ein zunächst am linken Ende des Schiebers aufgenommenes Teil sich unterhalb des Handhabungsportals 42 befindet und ein Teil, das sich zuvor auf der rechten Seite des Schlittens 92 befand, nunmehr von einer Greifeinrichtung auf dem Endabschnitt 32d aufgenommen werden kann, um beispielsweise damit die Bearbeitungsstation S₂₁ zu versorgen. Anschließend kann der Schlitten 92 wieder in seine Ausgangsposition zurückgefahren werden.

In entsprechender Weise kann der Schlitten 94 innerhalb der Speicherablage 18' aus seiner auf der rechten Seite befindlichen Position, die ausgezogen dargestellt ist, in Richtung des Pfeiles 95 in die gestrichelt gezeichnete Position auf der linken Seite, und anschließend wieder zurückverfahren werden, wobei vorzugsweise wiederum gleichzeitig zwei Teile bewegt werden können.

Alle übrigen Handhabungsoperationen an den Teilen werden von auf dem Handhabungsportal 42 verfahrbaren Schlitten bzw. von daran aufgenommenen Greifeinrichtungen ausgeführt. Hierzu gehören beispielsweise ein Verschwenken der Teile, ein Reinigen der Teile, ein Signieren der Teile und ein Ablegen bzw. Aufnehmen der Teile an Ablageplätzen 48, die in Fig. 6 lediglich schematisch angedeutet sind. Bevorzugt ist hierbei an dem jeweiligen Schlitten des Handhabungsportals 42 ein Schwenkarm vorgesehen, an dem die jeweilige Greifeinrichtung in geeigneter Weise wiederum verschwenkbar und/oder verfahrbar aufgenommen ist. Durch die Verwendung von Schwenkarmen, die gesteuert verschwenkbar sind, wird die Bauhöhe in Vertikalrichtung reduziert, da auf eine Z-Achse verzichtet werden kann und Vertikalbewegungen als auch Bewegungen zwischen gegenüberliegenden Ablageplätzen 48 durch einen Schwenkarm, der aus mindestens zwei miteinander gekoppelten Schwingen besteht, ausgeführt werden können.

Es versteht sich, dass die Anzahl der auf den Logistikportalen und auf den Handhabungsportalen verfahrbaren Schlitten in Abhängigkeit von den jeweiligen Anforderungen des Fertigungssystems in geeigneter Weise festgelegt werden kann.

Es versteht sich ferner, dass die Darstellungen in den Figuren der Zeichnung rein schematisch sind und nicht maßstabsgerecht sein müssen.

## Patentansprüche

1. Portal zur Bewegung von Teilen (50) in Horizontal- und in Vertikalrichtung, mit einer Horizontalführung (76), die an einer Vertikalverstrebung (86, 88) aufgenommen ist und auf der eine Mehrzahl von Schlitten (78, 78', 78", 78''') gesteuert verfahrbar ist, **dadurch gekennzeichnet, daß** zumindest zwei benachbarte Schlitten (78, 78', 78", 78''') über Streben (82, 82', 82", 82''') mit einer Gelenkverbindung (84, 84") gekoppelt sind, an der eine Greifeinrichtung (72, 72") zur Handhabung eines Teils (50) aufgenommen ist.

2. Portal nach Anspruch 1, wobei die Schlitten (78, 78', 78", 78''') als Läufer eines Direktantriebs ausgebildet sind, dessen Induktorkamm am Portal (34) vorgesehen ist.

3. Portal nach Anspruch 1 oder 2, mit einem Horizontalträger (74), an dem der Induktorkamm mit einer Führung (76) aufgenommen ist, auf dem die Schlitten (78, 78', 78", 78''') geführt sind.

4. Portal nach Anspruch 1 oder 3, das zumindest teilweise mit einer Auffangwanne (90) versehen ist.

5. Verkettetes Fertigungssystem zur Durchführung von Bearbeitungsoperationen an Teilen (50), mit mindestens einer ersten Bearbeitungsstation (S₁₁, S₁₂, S₁₃, S₁₄, S₁₅, S₁₆) zur Durchführung einer ersten Bearbeitungsoperation, mit mindestens einer zweiten Bearbeitungsstation (S₂₁, S₂₂, S₂₃, S₂₄, S₂₅, S₂₆) zur Durchführung einer zweiten Bearbeitungsoperation, mit mindestens einem ersten Portal (32, 34, 36, 38, 39, 32', 34') (Logistikportal), das sich in einer ersten Richtung (Y-Richtung) erstreckt und mindestens eine erste (S₁₁-S₁₆) und eine zweite (S₂₁-S₁₆) Bearbeitungsstation miteinander koppelt, mit mindestens einem zweiten Portal (40, 42, 44, 46) (Handhabungsportal), das sich quer zur ersten Richtung in einer zweiten Richtung (X-Richtung) erstreckt und eine Mehrzahl der ersten (S₁₁-S₁₆) oder zweiten (S₂₁-S₂₆) Bearbeitungsstationen miteinander koppelt, wobei zumindest jedem Handhabungsportal (40, 42, 44, 46) eine Speicherablage (12, 14, 16, 18, 20, 22, 24, 26, 28, 30, 16', 18') zur Aufnahme von Teilen (50) zugeordnet ist, wobei auf den Handhabungsportalen Schlitten (54) verfahrbar sind, die eine zumindest in Vertikalrichtung (Z-Richtung) verfahrbare Greifeinrichtung (70) aufweisen, die zumindest eine zusätzliche Handhabungsoperation, wie etwa Verschieben in Y-Richtung oder Verdrehen, erlaubt, und wobei auf den Logistikportalen (32, 34, 36, 38, 39, 32', 34') Schlitten (78, 78', 78'', 78''') verfahrbar sind, die mit einer Greifeinrichtung (72, 72'') zum Aufnehmen oder Ablegen von Teilen (50) zur Bewegung der Teile in Z-Richtung ausgebildet sind, wobei zumindest das Logistikportal (32, 34, 36, 38, 39, 32', 34') ein Portal gemäß einem der Ansprüche 1 bis 4 ist.

6. Fertigungssystem nach Anspruch 5, mit einer Mehrzahl von Handhabungsportalen (40, 42, 44, 46) und Logistikportalen (32, 34, 36, 38, 39, 32', 34'), die sich jeweils in Kreuzungspunkten (11, 13, 15, 17, 19, 21, 23, 25, 27, 29, 31, 33) miteinander kreuzen, wobei jedem Kreuzungspunkt (11, 13, 15, 17, 19, 21, 23, 25, 27, 29, 31, 33) eine Speicherablage (12, 14, 16, 18, 20, 22, 24, 26, 28, 30, 16', 18') zugeordnet ist.

7. Fertigungssystem nach Anspruch 5 oder 6, bei dem in den Speicherablagen (14) Zusatzeinrichtungen (64, 66, 68), wie etwa Reinigungseinrichtungen, Positioniereinrichtungen, Abblaseinrichtungen, Wascheinrichtungen, Signiereinrichtungen vorgesehen sind, mit denen die Greifeinrichtungen (70) an den Schlitten (54) der Handhabungsportale (40) zur Durchführung von Handhabungsoperationen zusammenwirken.

8. Fertigungssystem nach einem der vorhergehenden Ansprüche, bei dem die auf den Logistikportalen (32, 34, 36, 38, 39, 32', 34') verfahrbaren Schlitten (78, 78', 78", 78''') und Greifeinrichtungen (72, 72") lediglich zum Verfahren der Teile entlang der Logistikportale (32, 34, 36, 38, 39, 32', 34'), zur Bewegung der Teile (50) in Vertikalrichtung und zur Übergabe von Teilen ausgebildet sind.

9. Fertigungssystem nach einem der Ansprüche 5 bis 8, bei dem die Logistikportale (32', 34') in eine Mehrzahl von Einzelabschnitten (32a, 32b, 34a, 34b) unterteilt sind, die jeweils in den Speicherablagen (16', 18') enden, wobei innerhalb der Speicherablagen (16', 18') jeweils eine Transporteinrichtung (92, 94) zum Transport von Teilen (50) zwischen den jeweiligen Endabschnitten (32c, d, 34c, d) der Einzelabschnitte (32a, b, 34a, b) eines Logistikportals (32', 34') vorgesehen ist.

10. Fertigungssystem nach Anspruch 9, bei dem jeweils ein Schieber (92, 94) zum Transport von Teilen (50) zwischen den jeweiligen Endabschnitten (32c, d, 34c, d) innerhalb der Speicherablagen (16', 18') vorgesehen ist.

## Claims

1. A gantry for moving parts (50) in horizontal and vertical direction, comprising a horizontal guidance (76) arranged at a vertical strut arrangement (86, 88), wherein a plurality of slides (78, 78', 78'', 78''') is controllably displaceable along the horizontal guidance (76), **characterized in that** at least two adjacent slides (78, 78', 78'', 78''') are linked via struts (82, 82', 82'', 82''') to an articulated joint (84, 84''), a gripping device (72, 72'') for handling a part (50) supported on said articulated joint (84, 84'').

2. The gantry of claim 1, wherein the slides (78, 78', 78'', 78''') are configured as travelers of a direct drive, the direct drive having an inductor rail which is supported on said gantry (34).

3. The gantry of claim 1 or 2, comprising a horizontal beam (74) supporting the inductor rail and a guidance (76) for guiding the slides (78, 78', 78'', 78''') thereon.

4. The gantry of claim 1 or 3, wherein the gantry is provided at least partially with a drip pan (90).

5. A linked manufacturing system for conducting process operations on parts (50), comprising at least a first processing station (S₁₁, S₁₂, S₁₃, S₁₄, S₁₅, S₁₆) for performing a first processing operation, at least a second processing station (S₂₁, S₂₂, S₂₃, S₂₄, S₂₅, S₂₆) for performing a second processing operation, at least a first gantry (32, 34, 36, 38, 39, 32', 34') (logistics gantry) extending in a first direction (Y-direction) and linking at least a first (S₁₁-S₁₆) and a second (S₂₁-S₁₆) processing station, at least a second gantry (40, 42, 44, 46) (handling gantry) extending transversely to said first direction in a second direction (X-direction) and linking a plurality of said first (S₁₁-S₁₆) or said second (S₂₁-S₂₆) processing stations, wherein a storage device (12, 14, 16, 18, 20, 22, 24, 26, 28, 30, 16', 18') for receiving parts (50) is associated at least to each handling gantry (40, 42, 44, 46), wherein slides (54) are arranged displaceably along the handling gantries, the slides comprising each a gripping device (70) arranged displaceably at least in vertical direction (Z-direction), wherein the gripping devices (70) allow at least one additional handling operation, e.g. displacing in Y-direction or rotating, and wherein slides (78, 78', 78'', 78''') are arranged displaceably at the logistics gantries (32, 34, 36, 38, 39, 32', 34'), said slides (78, 78', 78'', 78''') being each provided with a gripping device (72, 72'') for taking up or putting down of parts (50), for moving said parts in Z-direction, wherein at least the logistics gantry (32, 34, 36, 38, 39, 32', 34') is a gantry according to any of claims 1 to 4.

6. The manufacturing system of claim 5, comprising a plurality of handling gantries (40, 42, 44, 46) and logistics gantries (32, 34, 36, 38, 39, 32', 34') which cross each other at crossing points (11, 13, 15, 17, 19, 21, 23, 25, 27, 29, 31, 33), wherein a storage device (12, 14, 16, 18, 20, 22, 24, 26, 28, 30, 16', 18') is associated to each crossing point (11, 13, 15, 17, 19, 21, 23, 25, 27, 29, 31, 33).

7. The manufacturing system of claim 5 or 6, wherein supplementary devices (64, 66, 68), e.g. cleaning devices, positioning devices, blowing devices, washing devices, marking devices, are provided in the storage devices (14), wherein the gripping devices (70) at the slides (54) of the handling gantries (40) for conducting handling operations cooperate with the supplementary devices.

8. The manufacturing system according of any of the preceding claims, wherein the slides (78, 78', 78'', 78''') arranged displaceably on the logistics gantries (32, 34, 36, 38,. 39, 32', 34') and the gripping devices (72, 72'') are arranged only for displacing the parts along the logistics gantries (32, 34, 36, 38, 39, 32', 34'), for moving the parts (50) in vertical direction and for handing over of parts.

9. The manufacturing system of any of claims 5 to 8, wherein the logistics gantries (32', 34') are sectioned into a plurality of individual gantry sections (32a, 32b, 34a, 34b), each gantry section ending in respective storage devices (16', 18'), wherein a transfer means (92, 94) is provided within each of the storage devices (16', 18') for transferring parts (50) between respective end sections (32c, d, 34c, d) of the individual gantry sections (32a, b, 34a, b) of a logistics gantry (32', 34').

10. The manufacturing system of claim 9, wherein a respective slider device (92, 94) for transferring parts (50) between the respective end sections (32c, d, 34c, d) within the storage devices (16', 18') is provided.

## Revendications

1. Portique pour le déplacement de pièces (50) dans la direction horizontale et dans la direction verticale, comportant un guidage horizontal (76), qui est reçu sur un entretoisement vertical (86, 88) et sur lequel une pluralité de chariots (78, 78', 78", 78''') sont commandés en déplacement, **caractérisé en ce qu'**au moins deux chariots (78, 78', 78", 78''') voisins sont couplés par l'intermédiaire de barres (82, 82', 82", 82''') à un assemblage articulé (84, 84') sur lequel est reçu un dispositif de préhension (72, 72') destiné à manutentionner une pièce (50).

2. Portique selon la revendication 1, dans lequel les chariots (78, 78', 78", 78''') sont conçus sous forme d'induits d'un entraînement direct, dont la came d'induction est prévue sur le portique (34).

3. Portique selon la revendication 1 ou 2, comportant un support horizontal (74), sur lequel la came d'induction est reçue avec un guidage (76), sur lequel les chariots (78, 78', 78", 78''') sont guidés.

4. Portique selon la revendication 1 ou 3, qui est muni au moins en partie d'une cuve de réception (90).

5. Système de fabrication en chaîne destiné à la mise en oeuvre d'opérations d'usinage sur des pièces (50), comportant au moins un premier poste d'usinage (S₁₁, S₁₂, S₁₃, S₁₄, S₁₅, S₁₆) destiné à mettre en oeuvre une première opération d'usinage, comportant au moins un deuxième poste d'usinage (S₂₁, S₂₂, S₂₃, S₂₄, S₂₅, S₂₆) destiné à mettre en oeuvre une deuxième opération d'usinage, avec au moins un premier portique (32, 34, 36, 38, 39, 32', 34') (portique logistique) qui s'étend dans une première direction (direction Y) et par lequel au moins un premier (S₁₁-S₁₆) et un deuxième (S₂₁-S₂₆) poste d'usinage sont couplés entre eux, avec au moins un deuxième portique (40, 42, 44, 46) (portique de manutention), qui s'étend dans une deuxième direction (direction X) transversalement à la première direction et par lequel une pluralité de premiers (S₁₁-S₁₆) et de deuxièmes (S₂₁-S₂₆) postes d'usinage sont couplés entre eux, dans lequel système un casier de stockage (12, 14, 16, 18, 20, 22, 24, 26, 28, 30, 16', 18') destiné à recevoir des pièces (50) est associé à au moins chaque portique de manutention (40, 42, 44, 46), des chariots (54) étant mobiles sur les portiques de manutention, lesquels comportent un dispositif de préhension (70), mobile au moins dans la direction verticale (direction Z), qui autorise au moins une opération de manutention supplémentaire, telle qu'un déplacement dans la direction Y ou une rotation, et des chariots (78, 78', 78", 78''') étant mobiles sur des portiques logistiques (32, 34, 36, 38, 39, 32', 34'), lesquels sont réalisés avec un dispositif de préhension (72, 72") pour réceptionner ou déposer des pièces (50) en vue de déplacer les pièces dans la direction Z, dans lequel système au moins le portique logistique (32, 34, 36, 38, 39, 32', 34') est un portique selon l'une quelconque des revendications 1 à 4.

6. Système de fabrication selon la revendication 5, comportant une pluralité de portiques de manutention (40, 42, 44, 46) et de portiques logistiques (32, 34, 36, 38, 39, 32', 34'), qui se croisent respectivement en des points d'intersection (11, 13, 15, 17, 19, 21, 23, 25, 27, 29, 31, 33), dans lequel système un casier de stockage (12, 14, 16, 18, 20, 22, 24, 26, 28, 30, 16', 18') est associé à chaque point d'intersection (11, 13, 15, 17, 19, 21, 23, 25, 27, 29, 31, 33).

7. Système de fabrication selon la revendication 5 ou 6, dans lequel, dans les casiers de stockage (14), il est prévu des dispositifs supplémentaires (64, 66, 68), tels que des dispositifs de nettoyage, des dispositifs de positionnement, des dispositifs de soufflage, des dispositifs de lavage, des dispositifs de marquage, avec lesquels coopèrent les dispositifs de préhension (70) sur les chariots (54) des portiques de manutention (40) afin de mettre en oeuvre des opérations de manutention.

8. Système de fabrication selon l'une quelconque des revendications précédentes, dans lequel les chariots (78, 78', 78", 78'''), mobiles sur les portiques logistiques (32, 34, 36, 38, 39, 32', 34'), et les dispositifs de préhension (72, 72") sont uniquement conçus pour le transport des pièces le long des portiques logistiques (32, 34, 36, 38, 39, 32', 34'), afin de déplacer les pièces (50) dans la direction verticale et de transférer les pièces.

9. Système de fabrication selon l'une quelconque des revendications 5 à 8, dans lequel les portiques logistiques (32', 34') sont divisés en une pluralité de tronçons individuels (32a, 32b, 34a, 34b), qui se terminent chacun dans les casiers de stockage (16', 18'), un dispositif de transport étant prévu à l'intérieur des casiers de stockage (16', 18') en vue de transporter les pièces (50) entre les tronçons d'extrémité (32c, d, 34c, d) respectifs des tronçons individuels (32a, b, 34a, b) d'un portique logistique (32', 34').

10. Système de fabrication selon la revendication 9, dans lequel il est prévu respectivement une coulisse (92, 94) pour le transport des pièces (50) entre les tronçons d'extrémité (32c, d, 34c, d) respectifs à l'intérieur des casiers de stockage (16', 18').
